# EUROPÄISCHE PATENTSCHRIFT

(11) **EP 0 725 039 B1**
(45) Veröffentlichungstag und Bekanntmachung des Hinweises auf die Patenterteilung: **12.10.2005**
(21) Anmeldenummer: 96100730.9
(22) Anmeldetag: 19.01.1996
(51) Int. Cl.: C02F 1/00, C02F 9/00, B01D 17/00, B01D 17/02, B01D 17/04, B01D 21/00, B01D 21/01, B01D 21/24

(54) **Verfahren zum Wiederaufbereiten von Waschwasser**
Process for regeneration of wash waters
Procédé de régénération des eaux de lavage

(30) Priorität: 06.02.1995 AT 25495
(43) Veröffentlichungstag der Anmeldung: 07.08.1996
(73) Patentinhaber: König, Wolfgang, A-5023 Salzburg (AT)
(72) Erfinder: König, Wolfgang, A-5023 Salzburg (AT)
(74) Vertreter: Hübscher, Helmut

(56) Entgegenhaltungen:
- WO-A-95/29877
- DE-A- 2 059 859
- DE-A- 4 040 007
- US-A- 4 652 368

## Beschreibung

Die Erfindung betrifft ein Verfahren zur Aufbereitung von mit kohlenwasserstoffhältigen Lösemitteln gemischten Waschwässem aus Waschanlagen für Fahrzeuge wobei die in der Waschanlage anfallenden Wasser-Lösemittelgemische zur Abscheidung des Lösemittels über einen Leichtölabscheider geführt werden und das verbleibende Gemisch in einem Reaktionsbehälter mit einem Flockungsmittel versetzt wird, bevor der ausgeflockte Schlamm durch Filtration abgetrennt und das erhaltene Reinwasser in die Waschanlage rückgeführt wird.

Die Oberflächen von Fahrzeugen od. dgl. werden, um Beschädigungen bei Lagerung und Transport zu verhindern vom Hersteller meist mit einer aus Paraffin bestehenden Schutzschicht überzogen, die dann vor der Auslieferung an einen Abnehmer wieder entfernt werden muß.

Ein Verfahren zur Aufbereitung von Waschwassern ist aus der DE 2 059 859 A bekannt. Zur Reinigung werden Kraftfahrzeuge bisher üblicherweise in Waschanlagen mit bis zu 90°C heißem Wasser mit einem Anteil an starkaromatenhältigen Lösemitteln, wie Petroleum oder Dieselöl, behandelt. Von Nachteil ist dabei allerdings stets, daß die Lösemittel bzw. die Reinigungsmittel nach ihrer Abtrennung vom Wasser entweder verbrannt oder gesammelt und einer Sondermüllverwertung zugeführt werden müssen. Es gibt auch Verfahren, nach denen das von Kraftfahrzeugen abgewaschene Wasser-Reinigungsmittelgemisch mehrmals im Kreis geführt wird, bis eine Sättigung im Waschwasser auftritt, wonach dieses entweder als Sondermüll oder nach aufwendigen Aufbereitungsarbeiten entsorgt wird.

Ein Lösemittel das sich zum Entfernen einer Paraffinschicht gut eignet offenbaren die EP 495 348 A und die AT 394 735 B. Dieses bekannte Lösungsmittel besteht aus mindestens 92 Vol.% eines isoparaffinischen Kohlenwasserstoffgemisches in einem Bereich von 13-15 Kohlenstoffatomen sowie einem Aromatengehalt von maximal 0,5 Gew.% und aus höchstens 8 Vol.% Carbonsäureester.

Der Erfindung liegt somit die Aufgabe zugrunde, ein Verfahren der eingangs geschilderten Art anzugeben, das die bekannten Nachteile vermeidet, zur Entfernung einer aus Paraffin bestehenden Schutzschicht eines Kraftfahrzeuges geeignet ist und bei dem das verwendete Lösemittel ohne Wirkungsverlust in einem Kreislauf geführt und wiederverwendet werden kann. Die Menge des zu entsorgenden Lösemittels soll so gering wie möglich gehalten werden.

Die Erfindung löst diese Aufgabe dadurch, daß das im Leichtölabscheider abgeschiedene Lösemittel zuerst über einen Papierfilter in einen Pufferbehälter geleitet und anschließend in einen Lösemittelvorratsbehälter gefördert wird, aus dem das Lösemittel dem Reinwasser zugemischt wird. Mit der Erfindung ist es möglich, das Lösemittel (beispielsweise das aus der EP 495 348 A bekannte) einer Wiederverwertung zuzuführen und die zu entsorgende Sondermüllmenge wesentlich zu reduzieren. Zur Entsorgung gelangen nur mehr der Restschlamm des Lösemittels von 3 bis 5% der ursprünglich eingesetzten Lösemittelmenge, so wie das vom Waschwasser abgetrennte Paraffin mit Flockungsmittel. Zum schonenden Transport wird das Wasser-Lösemittelgemisch aus einer Auffangwanne oder -grube mittels einer verwirbelungsarmen, an eine Druckluftanlage angeschlossenen Membranpumpe in den Leichtölabscheider geführt. Vom Leichtölabscheider wird das Lösemittel über den Papierfilter geführt, um die im Lösemittel enthaltenen Wachs- und Schmutzteilchen abzufiltern. Anschließend wird das wiedergewonnene Lösemittel über den Pufferbehälter in den Lösemittelvorratsbehälter zurückgefördert, von wo es ohne Zusatz von Frischeprodukt und ohne Minderung der Lösemittelkraft wiederverwendet werden kann. Nach dem Abscheiden des Lösemittels wird das verbleibende Wasser-Wachsgemisch in einen je nach Kreislaufmenge dimensionierten Pufferbehälter eingeleitet. Zum vorteilhaften Entfernen des Wachses aus dem Wasser-Wachsgemisch, wird das im Pufferbehälter befindliche Wasser-Wachsgemisch mit einer Pumpe verwirbelungsarm in den Reaktionsbehälter gepumpt, in den durch automatische Dosierung oder durch händisches Einstreuen ein Flockungsmittel eingebracht wird. Das Rühren mittels elektrisch betriebenem Rührwerk ruft eine Emulsionsspaltung und Sedimentation hervor, wobei der Flockungsvorgang automatisch zeitgesteuert beendet wird.

Um das gesamte Wasser-Wachsgemisch aus dem Reaktionsbehälter ausbringen zu können, werden das entstandene Gemisch aus Reinwasser und die mit Paraffinwachs und Restkohlenwasserstoffen gebundenen Flocken nach Beendigung des Flockungsvorganges flockenstrukturschonend mit einer Pumpe über eine Filteranlage gepumpt und wird nach Beendigung des Abpumpvorganges gespült um die noch vorhandenen Flocken ebenfalls über die Filteranlage abpumpen zu können. Als Filteranlage wird dabei vorzugsweise eine Sackfilteranlage benutzt. Der im Filtermodul abgefilterte Filterkuchen bildet den verbleibenden Abfall, der als verbrennbarer Sondermüll zu entsorgen ist. Das entstandene Reinwasser, welches maximal 5mg/l Kohlenwasserstoff enthält wird in einen größenmäßig der Gesamtkreislaufmenge entsprechenden Reinwasserbehälter gepumpt, in dem es bis zur weiteren Verwendung zwischengelagert wird. Um einer Verkeimung vorzubeugen und eine Verbesserung der Wasserqualität zu erreichen, wird der Reinwasserbehälter an eine Ozonanlage angeschlossen. Das Reinwasser wird bei Bedarf Hochdruckdampfstrahlgeräten oder anderen automatischen Heißwaschsystemen unter Zugabe des rückgewonnenen Lösemittels zugeführt. Mit der gleichzeitigen Führung von Wasser und Lösemittel in einem geschlossenen Kreislauf läßt sich die anfallende Sondermüllmenge um mehr als 90 % reduzieren.

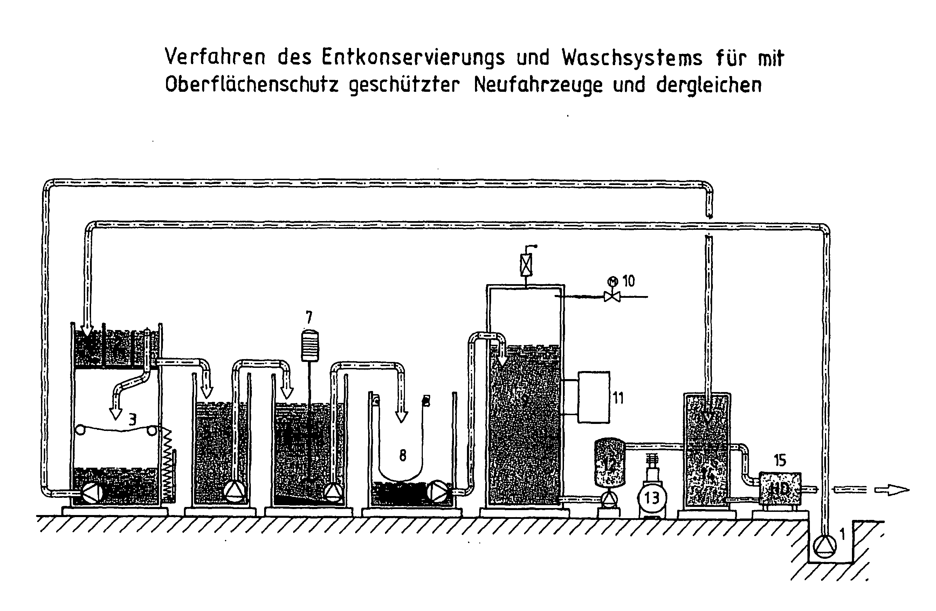

In der Zeichnung ist das erfindungsgemäße Verfahren anhand eines Schaubildes dargestellt.

Durch das Entfernen der Wachsschutzschicht auf Neufahrzeugen mittels Dampfstrahler und Lösemittel entsteht ein Gemisch aus Wasser, Wachs und Lösemittel. Dieses Gemisch wird von einer Pumpe 1 schonend in einen Leichtölabscheider 2 gepumpt. Dieser trennt das Lösemittel und das Wasser-Wachsgemisch mit Hilfe der unterschiedlichen spezifischen Dichten der Flüssigkeiten.

Das Wachs-Wassergemisch wird über einen Pufferbehälter 5 in einen Reaktionsbehälter 6 gebracht, in den das Flockungsmittel von Hand oder automatisch dosiert eingebracht wird. In diesem Behälter 6 wird durch Rühren 7 eine Emulsionsspaltung und Sedimentation hervorgerufen, wobei der Flockungsvorgang automatisch zeitgesteuert beendet wird. Durch Einschalten einer weiteren Pumpe wird dieses Gemisch flockenstrukturschonend über einen Sackfilter 8 geführt, wo die mechanische Trennung des Wassers vom Wachs erfolgt. Das vom Wachs gereinigte Wasser wird in einen Tank 9 zurückgeführt und bei Bedarf von dort unter Zumischung des rückgewonnenen Lösemittels Hochdruckdampfstrahlgeräten 15 zugeführt. Die im Zuge des Verfahrens verdampfte und verschleppte Wassermenge wird durch Frischwasser 10 ersetzt. Der Kreislauf ist somit geschlossen und es ist kein Kanalanschluß mehr notwendig.

Das Lösemittel wird durch Rohre vom Leichtölabscheider 2 auf ein Papierfilter 3 gebracht, welche auf mechanischem Wege die noch vorhandenen Schwebstoffe vom Lösemittel trennt. Das Lösemittel wird in einem Behälter 4 abgefangen und von dort in ein Gebinde 14 gefüllt, von wo es der Wiederverwertung zugeführt wird.

Die Anlage ist händisch oder automatisch zu steuern.

## Patentansprüche

1. Verfahren zur Aufbereitung von mit kohlenwasserstoffhältigen Lösemitteln gemischten Waschwässern aus Waschanlagen für Fahrzeuge, wobei die in der Waschanlage anfallenden Wasser-Lösemittelgemische zur Abscheidung des Lösemittels über einen Leichtölabscheider geführt werden und das verbleibende Gemisch in einem Reaktionsbehälter mit einem Flockungsmittel versetzt wird, bevor der ausgeflockte Schlamm durch Filtration abgetrennt und das erhaltene Reinwasser in die Waschanlage rückgeführt wird, **dadurch gekennzeichnet, daß** das im Leichtölabscheider (2) abgeschiedene Lösemittel zuerst über einen Papierfilter (3) in einen Pufferbehälter (4) geleitet und anschließend in einen Lösemittelvorratsbehälter (14) gefördert wird, aus dem das Lösemittel dem Reinwasser zugemischt wird.

2. Verfahren nach Anspruch 1, **dadurch gekennzeichnet, daß** das Wasser-Lösemittelgemisch aus einer Auffangwanne oder -grube mittels einer verwirbelungsarmen, an eine Druckluftanlage angeschlossenen Druckluft-Membranpumpe (1) in den Leichtölabscheider geführt wird.

3. Verfahren nach Anspruch 1, **dadurch gekennzeichnet, daß** das nach dem Abscheiden des Lösungsmittel verbleibende Wasser-Wachsgemisch in einen Pufferbehälter (5) eingeleitet wird.

4. Verfahren nach den Ansprüchen 1 und 3, **dadurch gekennzeichnet, daß** das im Pufferbehälter (5) befindliche Wasser-Wachsgemisch mit einer Pumpe verwirbelungsarm in den Reaktionsbehälter (6) gepumpt wird, in dem durch automatische Dosierung oder durch händisches Einstreuen ein Flockungsmittel eingebracht wird, das durch Rühren mittels elektrisch betriebenem Rührwerk (7) eine Emulsionsspaltung und Sedimentation hervorruft, wobei der Flockungsvorgang automatisch zeitgesteuert beendet wird.

5. Verfahren nach den Ansprüchen 1 und 4 **dadurch gekennzeichnet, daß** das entstandene Gemisch aus Reinwasser und die mit Paraffinwachs und Restkohlenwasserstoffen gebundenen Flocken nach Beendigung des Flockungsvorganges flockenstrukturschonend mit einer Pumpe über eine Filteranlage gepumpt wird, und daß nach Beendigung des Abpumpvorganges gespült wird, um die noch vorhandenen Flocken ebenfalls über die Filteranlage abpumpen zu können.

6. Verfahren nach den Ansprüchen 1 und 5 **dadurch gekennzeichnet, daß** der im Filtermodul (8) abgefilterte Filterkuchen als verbrennbarer Sondermüll entsorgt wird und daß das entstandene Reinwasser, das maximal 5mg/l Kohlenwasserstoffe enthält in einen größenmäßig der Gesamtkreislaufmenge entsprechenden Reinwasserbehälter (9) gepumpt wird.

7. Verfahren nach den Ansprüchen 1 und 6, **dadurch gekennzeichnet, daß** der Reinwasserbehälter (9) in dem das wiedergewonnene Reinwasser gelagert wird an eine Ozonanlage (11) angeschlossen wird und daß das Reinwasser wieder Hochdruckdampfstrahlgeräten (15) oder anderen automatischen Heißwaschsystemen zugeführt wird.

## Claims

1. Method for preparing washing water from vehicle washing installations mixed with hydrocarbon-containing dissolvents wherein the water / dissolvent mixtures in the washing installation are passed through a light oil separator for separation of the dissolvent and the remaining mixture is transferred to a reaction container with a flocculant before the flocculated silt is separated by filtration and the pure water obtained is returned to the washing installation, **characterised in that** the dissolvent separated in the light oil separator (2) is firstly passed through a paper filter (3) into a buffer container (4) and then transferred to a dissolvent supply container (14), from which the dissolvent is mixed with the pure water.

2. Method according to Claim 1, **characterised in that** the water / dissolvent mixture is passed from a collection tank or pit by means of a low-vorticity compressed air diaphragm pump (1) connected to a compressed air installation into the light oil separator.

3. Method according to Claim 1, **characterised in that** the water / wax mixture remaining after the separation of the dissolvent is introduced into a buffer container (5).

4. Method according to Claims 1 and 3, **characterised in that** the water / wax mixture located in the buffer container (5) is pumped with a pump with low vorticity into the reaction container (6), in which a flocculant is introduced by automatic dosing or manual dispersal, said flocculant bringing about through agitation with an electrically operated agitating device (7) de-emulsification and sedimentation wherein the flocculation process is ended automatically after a certain time period.

5. Method according to Claims 1 and 4, **characterised in that** the mixture of thus formed pure water and the flocks combined with paraffin wax and remaining hydrocarbons is pumped after completion of the flocculation process by a pump in a manner which is favourable to the flock structure through a filter installation and after completion of the pumping process is scoured in order to also be able to pump out the flocks that are still present through the filter installation.

6. Method according to Claims 1 and 5, **characterised in that** the filter cake filtered out in the filter module (8) is disposed of as a combustible special waste and that the pure water formed which contains a maximum of 5mg/l hydrocarbons is pumped into a pure water container (9) corresponding in terms of size to the entire amount of the circuit.

7. Method according to the Claims 1 and 6, **characterised in that** the pure water container (9) in which the recovered pure water is stored is connected to an ozone installation (11) and that the pure water is again supplied to high pressure steam jet apparatus (15) or other automatic hot washing systems.

## Revendications

1. Procédé de préparation d'eaux de lavage, mélangées à des solvants contenant des hydrocarbures et issues d'installation de lavage pour des véhicules, sachant que les mélanges eau-solvant, produits dans l'installation de lavage, sont guidés sur un séparateur à huile légère, pour la séparation du solvant, et le mélange subsistant est mélangé, dans un récipient de réaction, avec un agent floculent, avant que la boue, obtenue par floculation, soit séparée par filtration, et l'eau épurée obtenue est recyclée dans l'installation de lavage, **caractérisé en ce que** le solvant, ayant été séparé dans le séparateur d'huile légère (2), est d'abord guidé dans un filtre à papier (3), dans un récipient tampon (4) et, ensuite, transporté dans un récipient de stockage de solvant (14), d'où le solvant est ajouté en mélange à l'eau épurée.

2. Procédé selon la revendication 1, **caractérisé en ce que** le mélange eau-solvant, issu d'un bac ou d'une fosse de captage, est guidé dans le séparateur à huile légère au moyen d'une pompe à membrane (1), fonctionnant à l'air comprimé, produisant peu de tourbillonnement et raccordée à une installation d'air comprimé.

3. Procédé selon la revendication 1, **caractérisé en ce que** le mélange eau-cire, subsistant après la séparation du solvant, est introduit dans un récipient tampon (5).

4. Procédé selon les revendications 1 et 3, **caractérisé en ce que** mélange eau-cire, se trouvant dans le récipient tampon (5), est pompé avec une pompe, avec peu de tourbillonnement, dans le récipient de réaction (6), dans lequel, par un dosage automatique ou par une dispersion manuelle, un agent floculant est introduit et, par agitation, obtenue au moyen d'un agitateur (7) à entraînement électrique, provoque une cassure de l'émulsion et une sédimentation, le processus de floculation s'achevant de façon automatique par une commande temporelle.

5. Procédé selon les revendications 1 et 4, **caractérisé en ce que** le mélange produit, issu d'eau épurée, et les flocons liés à la cire de paraffine et aux hydrocarbures résiduels, après achèvement du processus de floculation, est pompé, en ménageant la structure des flocons, à l'aide d'une pompe, et passé par une installation de filtration, et, après achèvement du processus de pompage, est rincé pour pouvoir évacuer par pompage les flocons existant encore, également en passant par une installation de filtration.

6. Procédé selon les revendications 1 et 5, **caractérisé en ce que** le gâteau de filtration, issu de la filtration effectuée dans le module de filtration (8), est éliminé en tant que déchet spécial combustible et l'eau pure produite, contenant au maximum 5 mg/l d'hydrocarbures, est pompée dans un récipient à eau épurée (9) de grandes dimensions, correspondant à la quantité mise en circuit globale.

7. Procédé selon les revendications 1 et 6, **caractérisé en ce que** le récipient à eau épurée (9), dans lequel l'eau épurée, récupérée, est stockée, est raccordé à une installation d'ozone (11), et **en ce que** l'eau épurée est amenée de nouveau à des appareils à jet de vapeur sous haute pression (15), ou à d'autres systèmes automatiques de lavage à chaud.
